# DEMANDE DE BREVET EUROPEEN

(11) **EP 1 067 639 A1**
(43) Date de publication de la demande: **10.01.2001**
(21) Numéro de dépôt: 00401916.2
(22) Date de dépôt: 04.07.2000
(51) Int. Cl.: H01S 3/081, G02F 1/39

(54) **Cavité optique instable pour faisceau laser**

(30) Priorité: 09.07.1999 FR 9908955
(71) Demandeur: THOMSON-CSF, 75008 Paris (FR)
(72) Inventeur: Debuisschert, Thierry, 94117 Arcueil Cedex (FR); Pocholle, Jean-Paul, 94117 Arcueil Cedex (FR)

(57) **Abrégé**

L'invention concerne les cavités optiques dites instables dans lesquelles est créé un faisceau laser dont une partie est volontairement perdue pour servir hors de la cavité.

Des changements de direction (A, B, C, D) sont imposés, dans la cavité, au faisceau laser pour lui faire parcourir un trajet optique dit en anneau.

Pour s'affranchir des problèmes de tenue au flux des miroirs habituellement utilisés, il est proposé d'utiliser des prismes (Ps, P1, P2, P3) dont une face, utilisée en réflexion totale, assure les changements de direction (A, B, C, D).

Application en particulier dans le domaine des cavités laser et des oscillateurs paramétriques optiques.

## Description

La présente invention concerne les cavités optiques instables pour faisceau laser, utilisées en particulier dans le domaine des cavités laser et des oscillateurs paramétriques optiques.

Ces cavités sont dites instables parce qu'un rayon lumineux circulant dans ces cavités s'éloigne de l'axe optique au fur et à mesure de sa propagation. La partie extérieure du faisceau circulant dans la cavité est volontairement transmise hors de la cavité par un miroir de sortie prévu à cet effet ; cette partie extérieure constitue le faisceau utile.

Les miroirs utilisés dans les cavités optiques connues ont une tenue au flux limitée ; en effet le flux lumineux qui circule dans ces cavités a tendance à détériorer les traitements multidiélectriques des miroirs qui assurent les changements de direction.

La présente invention a pour but d'éviter cet inconvénient.

Pour atteindre ce but deux voies étaient possibles : soit trouver des traitements multidiélectriques plus résistants, soit s'affranchir de ces traitements. C'est la deuxième voie qui a été explorée dans le cadre de l'invention.

Selon l'invention il est proposé une cavité optique instable pour faisceau laser, dans laquelle est créé un faisceau, cette cavité présentant un trajet optique dit en anneau, avec n, où n est un entier supérieur à 2, changements de direction pour réaliser l'anneau et comportant, dans le trajet optique, un ensemble optique de grandissement, n moyens de déviation pour faire subir au faisceau créé dans la cavité les n changements de direction, et une sortie, caractérisée en ce que les moyens de déviation sont n prismes dont chacun présente une interface, dite interface réfléchissante, de type air-verre qui assure un des changements de direction par une réflexion totale et en ce que n-1 des prismes, appelés grands prismes, ont leur interface réfléchissante de taille suffisante pour réfléchir, dans la cavité, l'intégralité du faisceau tandis que l'un des prismes, appelé prisme de sortie, est disposé au niveau de la sortie et a son interface réfléchissante de taille insuffisante pour réfléchir, dans la cavité, l'intégralité du faisceau créé dans la cavité.

La présente invention sera mieux comprise et d'autres caractéristiques apparaîtront à l'aide de la description ci-après et des figures s'y rapportant qui représentent :
- la figure 1, un schéma d'une cavité selon l'invention,
- les figures 2 et 3, des schémas de la cavité selon la figure 1 utilisée en tant que cavité laser,
- la figure 4, un schéma d'une variante à la cavité selon la figure 2,
- les figures 5 à 7, des schémas de la cavité selon la figure 1 utilisée en tant qu'oscillateur paramétrique optique,
- la figure 8, une vue en coupe plus détaillée de la cavité selon le schéma de la figure 6.

Sur les différentes figures les éléments correspondants sont désignés par les mêmes repères.

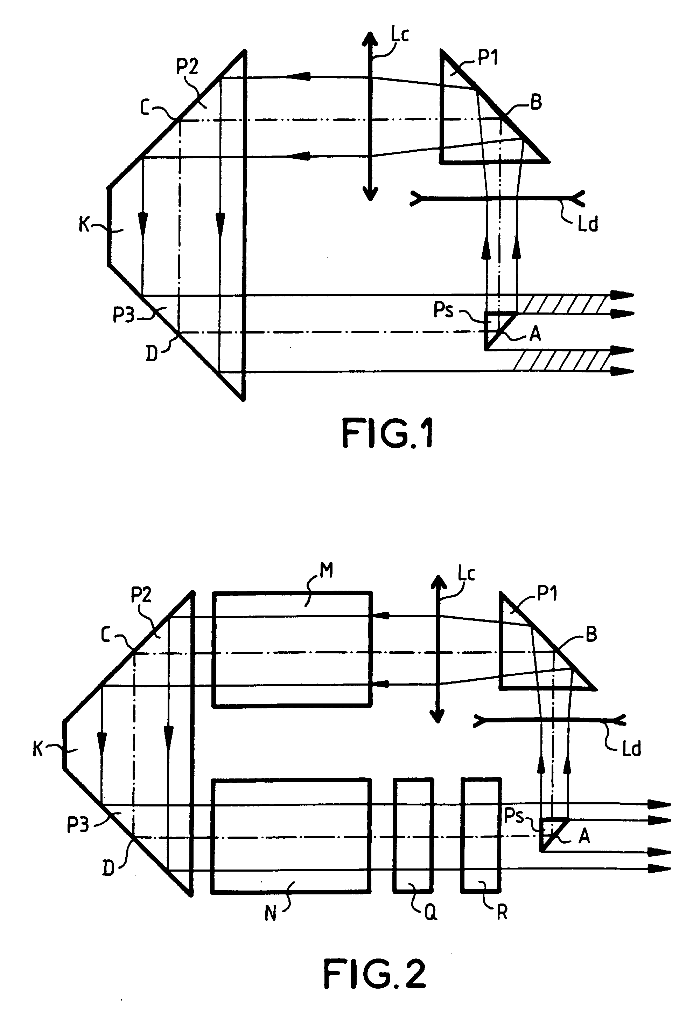

La figure 1 est une vue en coupe d'une cavité de type instable ; cette cavité présente un trajet optique en anneau, ABCD, représenté en traits d'axes ; il est à remarquer que le trajet optique est en forme de rectangle dans l'exemple décrit et que les trajets optiques en anneaux sont, en réalité, des polygones convexes.

Sur la figure 1 n'ont été représentés que les éléments qui concourent à guider un faisceau laser dans la cavité ; les autres éléments, tels en particulier que ceux qui produisent ce faisceau laser n'ont pas été dessinés afin de rendre le dessin plus clair et de faciliter l'explication et la compréhension de l'invention.

La cavité selon la figure 1 comporte quatre prismes Ps, P1 à P3 avec chacun une de leurs faces utilisée en réflexion totale ; les faces utilisées en réflexion totale sont respectivement disposées aux quatre sommets du rectangle ABCD. La cavité comporte également un ensemble optique de grandissement constitué d'une lentille divergente Ld et d'une lentille convergente Lc respectivement disposées dans les tronçons AB et BC de l'anneau.

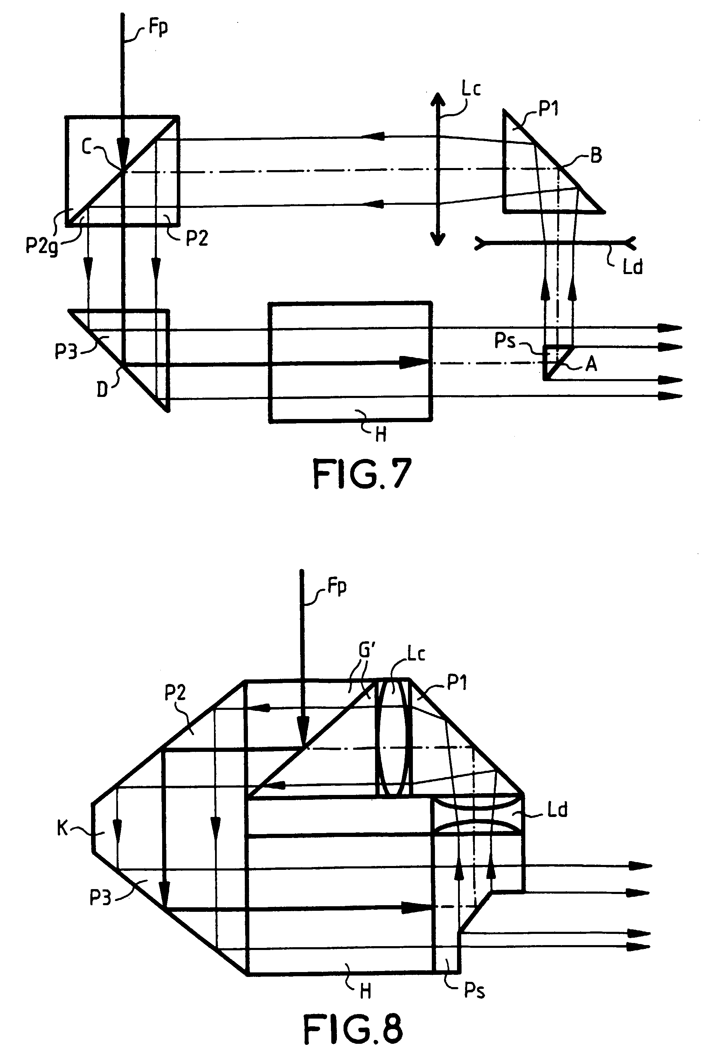

Il est à noter que les prismes P2 et P3 sont regroupés en un seul bloc optique, K, dans l'exemple décrit mais pourraient également être distincts l'un de l'autre comme il apparaîtra dans la réalisation selon la figure 7.

Le pourtour du faisceau laser a été dessiné en traits fins avec des pointes de flèches qui montrent le sens de propagation de la lumière.

Les quatre prismes Ps, P1 à P3 sont des prismes à section en forme de triangle rectangle isocèle ; leurs faces dont la trace sur la figure 1 constitue les deux côtés du triangle isocèle, servent respectivement de face d'entrée et de face de sortie ; leur face dont la trace sur la figure 1 constitue l'hypoténuse du triangle rectangle isocèle, est celle qui est utilisée en réflexion totale. Bien entendu, du fait que les prismes P2, P3 sont regroupés dans le bloc optique K, la face de sortie du prisme P2 et la face d'entrée du prisme P3 sont des faces virtuelles mais tout se passe, sur le plan optique, comme si elles existaient et formaient deux faces parallèles séparées par une lame à face parallèles en un même matériau que les prismes.

L'ensemble de grandissement Ld-Lc est disposé de part et d'autre du prisme P1 : la lentille divergente Ld transforme le faisceau laser à rayons parallèles, en provenance du prisme Ps, en un faisceau divergent qui est dévié à angle droit par le prisme P1, puis la lentille convergente Lc transforme le faisceau laser divergent en un faisceau à rayons parallèles ; le grandissement est égal au rapport des distances focales de la lentille Lc sur la lentille Ld. L'ensemble de grandissement Ld-Lc pourrait être disposé différemment dans le trajet optique à l'intérieur de la cavité, par exemple entre les lentilles P1 et P2 ou P3 et Ps. Il est généralement préférable que le faisceau laser soit à rayons parallèles lorsqu'il arrive au niveau du prisme Ps, étant donné que c'est une partie de ce faisceau qui sort de la cavité au niveau du prisme de sortie que constitue le prisme Ps. Le prisme de sortie Ps, contrairement aux prismes P1 à P3, a une taille insuffisante pour réfléchir, dans la cavité, l'intégralité du faisceau laser qui arrive à son niveau ; le prisme Ps joue ainsi le rôle de pupille et détermine la section du faisceau laser dans la cavité ; seule la lumière qu'il réfléchit est recyclée dans la cavité, celle qui passe autour du prisme Ps constitue le faisceau de sortie de la cavité ; elle a été repérée par des hachures sur la figure 1. Eventuellement, si le faisceau était divergent à la sortie de la cavité, il pourrait être transformé en un faisceau à rayons parallèles, par exemple au moyen d'une lentille convergente.

Il est à noter qu'il est préférable, dans les prismes, que les interfaces traversées par les faisceaux soient traitées antireflet, sans que cela soit indispensable.

La figure 2 représente, vue en coupe, la cavité selon la figure 1 dans un exemple d'utilisation en tant que cavité laser. Pour une telle utilisation une tête laser avec diodes, M, est insérée entre la lentille convergente Lc et le prisme P2 tandis que, entre le prisme P3 et le prisme Ps, sont successivement disposés une tête laser avec diodes, N, un dispositif de déclenchement, Q, appelé Q-switch dans la littérature anglo-saxonne et un rotateur de Faraday, R.

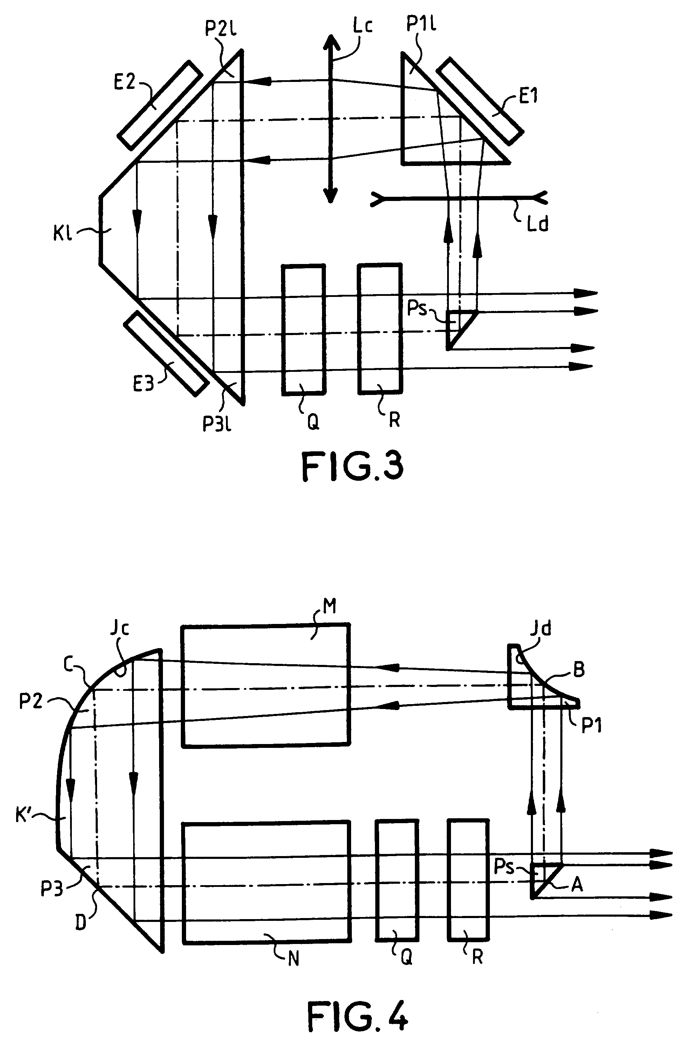

La figure 3 concerne une variante à la cavité laser selon la figure 2. Dans cette variante les têtes laser M, N sont remplacées par des têtes laser associées aux prismes P1 à P3 : le prisme P1 et le bloc optique K sont réalisés en matériau actif c'est-à-dire en matériau laser aussi appelé matériau amplificateur qui, dans l'exemple décrit est du Grenat d'Yttrium dopé Néodyme, connu sous la référence Nd: YAG ; pour marquer la différence entre les matériaux utilisés dans les réalisations selon les figures 2 et 3, les références P1, K, P2, P3 ont été respectivement remplacées par P1I, Kl, P2I, P3I ; un pompage laser est effectué au niveau des faces de réflexion des prismes P1I, P2I et P3I, respectivement par trois barrettes de diodes laser E1, E2 et E3. Comme dans la réalisation selon la figure 2 un dispositif de déclenchement, Q, et un rotateur de Faraday, R, sont disposés en série entre les prismes P3 et Ps.

La figure 4 concerne une autre variante à la cavité laser selon la figure 2 ; selon cette variante les faces planes utilisées en réflecteurs dans les prismes P1 et P2 sont remplacées par des faces sphériques pour constituer respectivement un réflecteur convexe Fd et un réflecteur concave Fc ; ces deux réflecteurs constituent un ensemble optique de grandissement qui remplace les lentilles Ld, Lc de la réalisation selon la figure 2. Les éléments M, N, Q, R de la figure 2 sont également présents sur la figure 4.

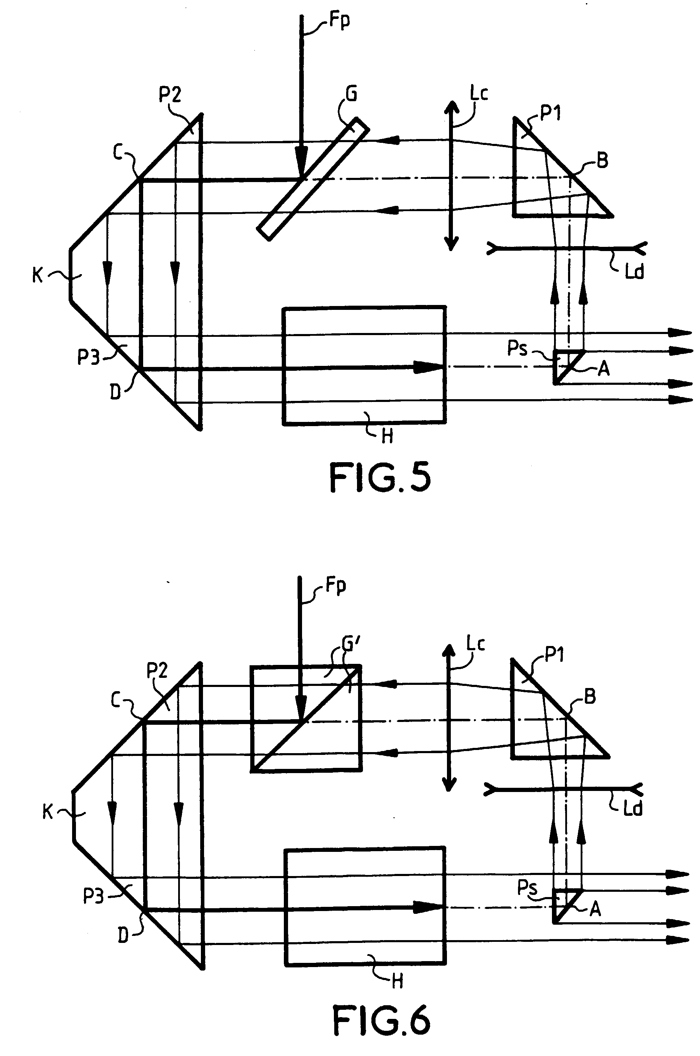

Les figures 5 à 8 sont des vues en coupe qui montrent comment la cavité instable selon la figure 1 peut être utilisée pour réaliser des oscillateurs paramétriques optiques ou O.P.O. qui constituent des sources laser à longueur d'onde réglable ; le fait que la cavité selon la figure 1 puisse fonctionner sur une grande gamme de longueurs d'onde prend donc ici toute son importance.

Les O.P.O. présentent une contrainte de réalisation qui n'existe pas dans les cavités laser, à savoir le couplage d'un faisceau de pompe, Fp, dans la cavité. Les figures 5 à 7 sont trois schémas qui illustrent trois manières différentes d'effectuer ce couplage du faisceau de pompe.

Dans le cas de la réalisation selon la figure 5 une lame dichroïque, G, est insérée entre la lentille convergente Lc et le prisme P2 ; cette lame, inclinée à 45 degrés par rapport au tronçon BC, est transparente pour le faisceau laser dans la cavité et réfléchissante pour le faisceau de pompe. L'O.P.O. comporte un cristal non-linéaire, H, inséré dans le tronçon CA et qui constitue le milieu laser de l'O.P.O.

La réalisation selon la figure 6 correspond à celle selon la figure 5 à la différence près que, en lieu et place de la lame dichroïque G, se trouve un prisme polariseur G'; bien entendu il faut dans ce cas, que le faisceau pompe soit polarisé perpendiculairement au faisceau créé dans la cavité.

La réalisation selon la figure 7 est une variante à celle selon la figure 6. Le prisme polariseur G' est retiré et le bloc optique K est remplacé par deux prismes distincts, P2g et P3. Le prisme P2g est un prisme polariseur qui joue un double rôle : assurer le couplage du faisceau de pompe, Fp, dans la cavité et provoquer une déviation du faisceau créé dans la cavité; là encore le faisceau de pompe doit être polarisé perpendiculairement au faisceau créé dans la cavité. Dans cette réalisation le faisceau créé dans la cavité est réfléchi par la surface séparatrice du prisme polariseur et la partie du prisme P2g que traverse le faisceau créé dans la cavité correspond au prisme P2 du bloc optique K des figures 5 et 6 ; quant au faisceau de pompe il traverse, sans être dévié, le prisme P2g.

Les cavités selon les figures 2 à 7 peuvent être réalisées sous forme compacte comme le montre la figure 8 qui est une vue en coupe ; sur cette figure apparaît de façon plus détaillée comment sont assemblés les différents éléments de l'O.P.O. de la figure 6. Dans cette réalisation les éléments successifs Ld, P1, Lc, G', K, H, Ps sont accolés et le prisme de sortie Ps est constitué par un bloc optique conçu pour faciliter l'assemblage ; ce bloc optique correspond au prisme Ps de la figure 6 sur les deux faces orthogonales duquel auraient été plaquées respectivement deux lames à faces parallèles.

Il est à noter que, dans une telle réalisation il est difficile d'accorder la longueur d'onde de la cavité en tournant le cristal H autour de l'axe de la cavité c'est-à-dire autour du tronçon AD ; cet accord en fréquence peut cependant être assuré en modifiant la direction de propagation du faisceau de pompe, Fp, par rapport à la face d'entrée du prisme polariseur ce qui entraîne une modification identique du faisceau de pompe dans le cristal non-linéaire, H.

La présente invention n'est pas limitée aux exemples décrits où mentionnés c'est ainsi, en particulier, que dans la cavité le trajet optique dit en anneau peut être obtenu avec un nombre entier de prismes de déviation différent de 4 mais au moins égal à 3.

De même les lentilles Ld, Lc peuvent, à l'aide de verres d'indices différents, être réalisées de manière à présenter des faces d'entrée et de sortie planes ce qui facilite leur assemblage dans la cavité ; c'est d'ailleurs le cas pour les lentilles Lc, Ld de la figure 8.

Il est à noter que les têtes laser avec diodes peuvent dans les cavités laser être réduites à une seule et que, comme pour les lentilles Ld, Lc, les autres éléments constitutifs des cavités laser peuvent être disposés en différents endroits dans le trajet optique défini par les prismes déviateurs.

## Revendications

1. Cavité optique instable pour faisceau laser, dans laquelle est créé un faisceau, cette cavité présentant un trajet optique (ABCD) dit en anneau, avec n, où n est un entier supérieur à 2, changements de direction (A, B, C, D) pour réaliser l'anneau et comportant, dans le trajet optique, un ensemble optique de grandissement (Ld, Lc ; Jd, Jc), n moyens de déviation pour faire subir au faisceau créé dans la cavité les n changements de direction, et une sortie, caractérisée en ce que les moyens de déviation sont n prismes (P1-P3, Ps) dont chacun présente une interface, dite interface réfléchissante, de type air-verre qui assure un des changements de direction par une réflexion totale et en ce que n-1 des prismes (P1-P3), appelés grands prismes, ont leur interface réfléchissante de taille suffisante pour réfléchir, dans la cavité, l'intégralité du faisceau tandis que l'un des prismes (Ps), appelé prisme de sortie, est disposé au niveau de la sortie et a son interface réfléchissante de taille insuffisante pour réfléchir, dans la cavité, l'intégralité du faisceau créé dans la cavité.

2. Cavité optique instable selon la revendication 1, caractérisée en ce que, pour une utilisation en cavité laser, elle comporte p, avec p entier au moins égal à 1, têtes laser avec diodes de pompage (M, N ; P1I-E1, P21-E2, P3I-E3) insérés dans le trajet optique.

3. Cavité optique instable selon la revendication 3, caractérisée en ce que p est au plus égal à n-1 et en ce que, pour constituer les têtes laser avec diodes, p des grands prismes (P1I, P2I, P3I) sont réalisés en matériau laser et des diodes lasers (E1, E2, E3) sont associées aux p grands prismes pour effectuer un pompage optique.

4. Cavité optique instable selon la revendication 1, caractérisée en ce que deux des prismes (P1, P2) ont leur interface réfléchissante (Jd, Jc) qui est en forme de miroir, divergent pour l'un et convergent pour l'autre et en ce que l'ensemble optique de grandissement est constitué par les interfaces réfléchissantes de ces deux prismes.

5. Cavité optique instable selon la revendication 1, caractérisée en ce que, pour une utilisation en oscillateur paramétrique optique, elle comporte des moyens de couplage optique (G ; G'; P2g) et un cristal non-linéaire (H) insérés dans le trajet optique, les moyens de couplage optique étant destinés au couplage d'un faisceau de pompe (Fp) dans la cavité.

6. Cavité optique instable selon la revendication 5, caractérisée en ce que les moyens de couplage optique sont constitués par une lame dichroïque (G) utilisée en transparence pour le faisceau créé dans la cavité et en réflexion totale pour le faisceau de pompe.

7. Cavité optique instable selon la revendication 5, caractérisée en ce que les moyens de couplage optique sont constitués par un prisme polariseur (G') utilisé en transparence pour le faisceau créé dans la cavité et en réflexion totale pour le faisceau de pompe.

8. Cavité optique instable selon la revendication 7, caractérisée en ce que les moyens de couplage optique sont constitués par un des n prismes, ce prisme (P2g) étant un prisme polariseur utilisé en transparence pour le faisceau de pompe.
